Europäisches Patentamt

European Patent Office

Office européen des brevets

(19)

(11) Veröffentlichungsnummer: **0 106 041**
**B1**

(12) # EUROPÄISCHE PATENTSCHRIFT

(45) Veröffentlichungstag der Patentschrift:
**13.11.85**

(51) Int. Cl.⁴: **H 02 M 7/217**

(21) Anmeldenummer: **83107494.3**

(22) Anmeldetag: **29.07.83**

(54) Stromversorgung.

(30) Priorität 23.09.82 DE 3235196

(43) Veröffentlichungstag der Anmeldung·
**25.04.84 Patentblatt 84/17**

(45) Bekanntmachung des Hinweises auf die Patenterteilung:
**13.11.85 Patentblatt 85/46**

(84) Benannte Vertragsstaaten:
**DE FR GB NL**

(56) Entgegenhaltungen:
US - A - 4 347 561

IBM TECHNICAL DISCLOSURE BULLETIN, Band 20, Nr. 8, Januar 1978, Seiten 2945-2947
Patent Abstracts of Japan, Band 3, Nr. 82, 14. Juli 1979, Seite 164E123 & JP-A-54-61631

(73) Patentinhaber: **ROBERT BOSCH GMBH, Postfach 50, D-7000 Stuttgart 1 (DE)**

(72) Erfinder: **Hornung, Friedrich, Dipl.-Ing., Am Ochsenwald 10A, D-7000 Stuttgart 80 (DE)**

**Beschreibung**

Die Erfindung geht aus von einer Gleichspannungsversorgung nach der Gattung des Hauptanspruchs. Bei elektrischen Baugruppen, die in netzbetriebenen Geräten eingesetzt werden, ist stets ein Stromversorgungsteil notwendig, das aus der hohen Netz-Wechselspannung eine niedrige Betriebs-Gleichspannung für die elektrische Baugruppe erzeugt. Üblicherweise werden hierfür Transformatorschaltungen eingesetzt. Bei kleinen, handlichen Geräten ist dies von Nachteil, da der Transformator einerseits einen großen Raumbedarf hat und andererseits oft das teuerste Bauelement der Schaltung darstellt. Eine preisgünstigere Lösung ist die Verwendung von Einweg-Gleichrichterschaltungen, die über Vorwiderstände direkt vom Netz gespeist werden. Bei einem höheren Gleichstrombedarf scheidet dieses Verfahren jedoch wegen des hohen Wärmeanfalls am Vorwiderstand häufig aus. Die Verwendung eines geeigneten Vorkondensators ist wiederum wesentlich teurer und wegen des hohen Volumens des Kondensators bei beengten Platzverhältnissen oft nicht realisierbar.

Die erfindungsgemäße Anordnung mit den kennzeichnenden Merkmalen des Hauptanspruchs hat demgegenüber den Vorteil, daß der Wärmeanfall und das Volumen sehr gering sind. Die Schaltung ist weiterhin betriebssicher und damit mit einfachen Mitteln aufzubauen. Als weiterer Vorteil ist anzusehen, daß der Schaltvorgang am elektronischen Schalter nur bei niedrigen Kollektor-Emitter-Spannungen stattfindet, und deshalb auch die Auswahl geeigneter elektronischer Schalter unkritisch ist. Es können daher leicht einfache Schalttransistoren verwendet werden.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft ist es, den elektronischen Schalter mit einem Schwellwertschalter anzusteuern, der beim Überschreiten eines vorgegebenen Spannungswertes der Netzspannung den elektronischen Schalter ausschaltet. Hierdurch wird gewährleistet, daß bei einem bestimmten Wert der Netzspannung der elektronische Schalter gesperrt wird. Der Schwellwertschalter wird im einfachsten Fall durch einen Hilfstransistor gebildet, an dessen Basis ein Teil der Netzspannung angelegt ist. Die Schaltschwelle wird dann durch die Basis-Emitter-Durchbruchspannung des Hilfstransistors bestimmt, so daß weitere Bauelemente nicht erforderlich sind. Um einen möglichst guten Regeleffekt zu erhalten ist es günstig, den elektronischen Schalter als Darlington-Transistor auszubilden.

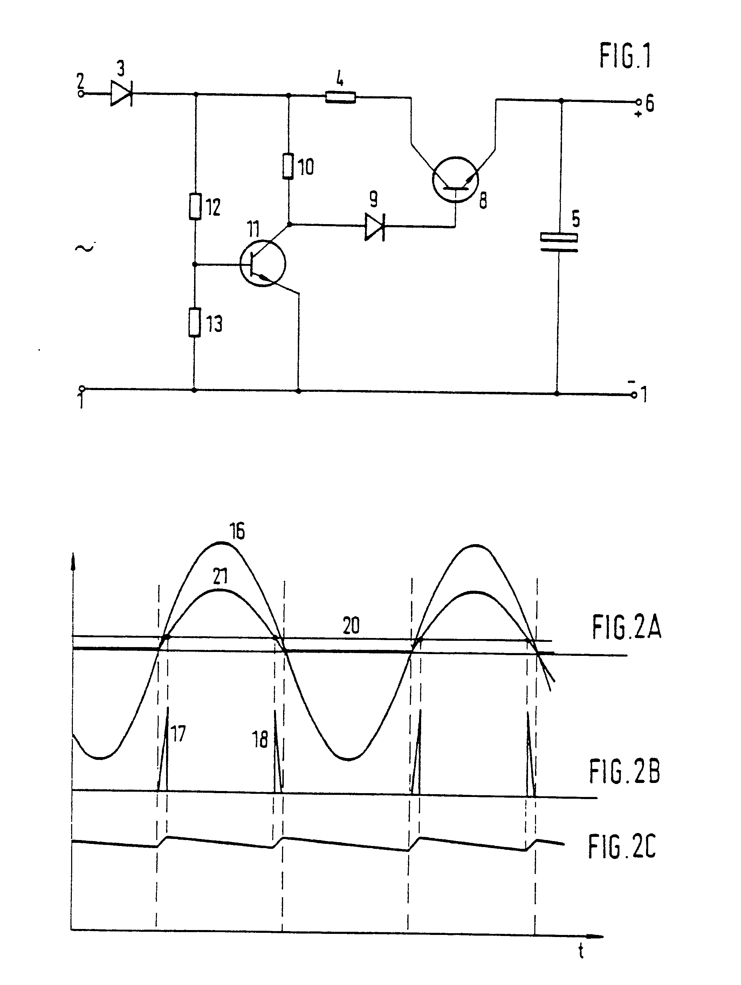

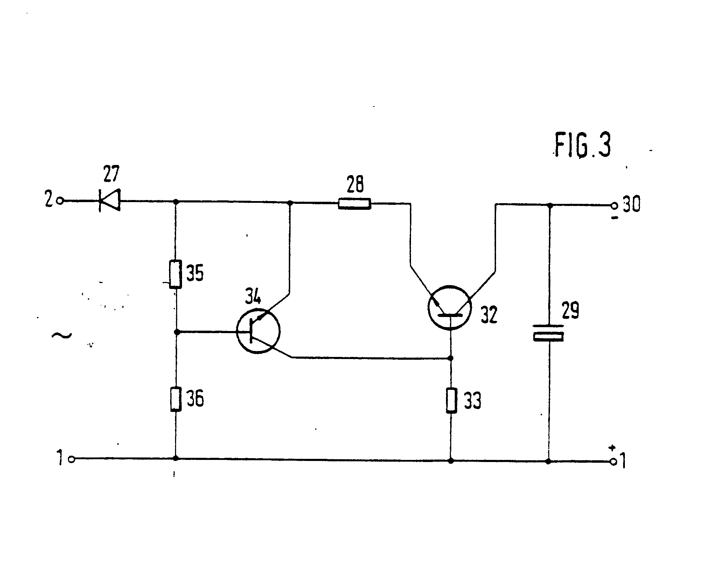

Zwei Ausführungsbeispiele der Erfindung sind in der Zeichnung dargestellt und in der nachfolgenden Beschreibung näher erläutert. Es zeigen Fig. 1 ein erstes Ausführungsbeispiel für eine positive Betriebsspannung, Fig. 2 ein Diagramm zur Erläuterung der Funktionsweise der Schaltungsanordnung nach Fig. 1 und Fig. 3 ein weiteres Ausführungsbeispiel für eine negative Betriebsspannung.

In Fig. 1 wird an die Klemmen 1 und 2 die Netzwechselspannung angeschlossen. Von der Klemme 2 führt eine in Flußrichtung geschaltete Diode 3 zu einem Vorwiderstand 4. Zwischen der Diode 3 und dem Widerstand 4 ist ein Widerstand 12 angeschlossen, der mit einem Widerstand 13 in Reihe geschaltet ist. Der andere Anschluß des Widerstands 13 ist zur Klemme 1 geführt. Zwischen den Widerständen 12 und 13 ist die Basis eines Transistors 11 angeschossen. Der Emitter des Transistors 11 führt zur Klemme 1 während der Kollektor des Transistors 11 über einen Widerstand 10 mit der Leitung zwischen der Diode 3 und dem Widerstand 4 verbunden ist. Vom Kollektor des Transistors 11 führt eine Diode 9 zur Basis eines Transistors 8. Der Kollektor des Transistors 8 steht mit dem weiteren Anschluß des Vorwiderstandes 4 in Verbindung, während der Emitter des Transistors 8 zu einer Anschlußklemme 6 führt, an der eine positive Gleichspannung abgreifbar ist. Der negative Anschluß ist die Klemme 1. Zwischen der Klemme 6 und der Klemme 1 ist noch ein Kondensator 5 geschaltet. An die Klemme 6 und 1 ist ein elektrischer Verbraucher anschließbar, der mit einer positiven Versorgungsspannung betrieben wird.

Die Wirkungsweise der Schaltungsanordnung ist anhand des Diagrammes in Fig. 2 näher erläutert. Die Schaltungsanordnung baut auf der herkömmlichen Einwegschaltung mit der Diode 3, dem Widerstand 4 und dem Kondensator 5 auf. Der Schalttransistor liegt in Reihe mit dem Vorwiderstand 4. Er wird so gesteuert, daß der Ladestrom zum Kondensator 5 nicht wie üblich im Maximum der Halbwelle der Wechselspannung fließt, sondern nur kurzzeitig am Anfang und am Ende der Halbwelle. Der Transistor 8 wird nur durchgesteuert, solange der Augenblickswert der Netzspannung gleich oder nur wenig größer ist als die Ladespannung am Kondensator 5. Während der Zeit, in der der Augenblickswert der Netzspannung wesentlich größer ist als die Spannung am Kondensator 5, bleibt der Transistor 8 gesperrt. Damit fließt in den Zeiten, in denen am Widerstand 4 große Spannungsdifferenzen auftreten würden, kein Strom. Der Widerstand 4 hat nur noch die Funktion eines Strombegrenzers, insbesondere bei der Einschaltflanke des Stromimpulses. Er kann um typisch 3 bis 4 Größenordnungen kleiner gewählt werden, als der sonst bei der Einwegschaltung übliche Vorwiderstand. Damit reduziert sich auch die Verlustwärme.

In Fig. 2a ist mit 16 die Netzspannung bezeichnet, die an den Klemmen 1 und 2 der Schaltungsanordnung anliegt. Am Spannungsteiler mit den Widerständen 12 und 13 steht die Steuerspannung für den Transistor 11 zur Verfügung, die in Fig. 2a mit 21 bezeichnet ist. Die Steuerspannung verläuft in der positiven Halbwelle analog zur Netzspannung 16. Übersteigt die Steuerspannung 21 den Basis-Emitterschwellwert des Hilfstransistors 11, dann wird der normalerweise über Widerstand 10 und Diode 9 zum Transistor 8 fließende Basisstrom zur Masseleitung abgeleitet und damit der Transistor 8 gesperrt. Die Schwellwertspannung ist in Fig. 2a mit 20 bezeichnet. Wie dies in Fig. 2b dargestellt ist, wird der Kondensator 5 nur geladen, solange die Steuerspannung 21 kleiner ist als die Basis-Emitterspannung 20 des Hilfstransistors. Pro Netzperiode erhält man also zwei Ladestromstöße 17 und 18, so daß sich annähernd das Verhalten eines Zweiwegspitzengleichrichters ergibt. Aufgrund der zweimaligen Ladung pro Vollwelle kann der Kondensator 5 klein gewählt werden. Der Spannungsverlauf am Kondensator 5 ist in Fig. 2c dargestellt.

Während der negativen Halbwellen sperrt die Diode 3. Die Diode 9 verhindert den Rückfluß der Kondensatorladung über die Emitter-Basis-Strecke des Transistors 8 und den Transistor 11 in der Zeit, in der der Transistor 11 leitend geschaltet ist.

Die Schaltung nach Fig. 1 weist sowohl gegenüber Speisespannungs- als auch Lastschwankungen selbstregelnde Eigenschaften auf. Steigt die Speisespannung 16, dann wird die Amplitudenerhöhung der Stromimpulse 17 und 18 durch eine Verkleinerung der Stromimpulsdauer kompensiert. Die Steuerspannung 21 erreicht den Basis-Emitterschwellenwert 20 früher, dadurch werden die Impulse schmäler. Die Ladung, die jeder Stromimpuls in den Kondensator liefert, bleibt dadurch weitgehend konstant.

Steigt der Laststrom an, dan fällt die Kondensatorspannung in Fig. 2c stärker ab. Damit steigt die für die Kondensatornachladung maßgebliche Spannungsdifferenz zum Augenblickswert der Speisespannung 16. In diesem Fall nimmt sowohl die Amplitude als auch die Dauer der Stromimpulse 17 und 18 zu. Da der Widerstand 4 relativ niederohmig ist, wird entsprechend kräftig nachgeladen, bzw. die Spannungsdifferenz besser ausgeglichen. Umgekehrte Störvorgänge ergeben die entgegengesetzten Abläufe.

Für den Transistor 8 wird vorteilhafterweise ein Hochspannungs-Darlington-Transistor verwendet, so daß die Steuerschaltung mit Bauelementen kleiner Leistung aufgebaut werden kann. Durch den Schaltbetrieb des Transistors 8 treten an ihm geringe Wärmeverlustleistungen auf, so daß der Wärmeverbrauch der Schaltungsanordnung auch im Hinblick auf den niedrigen Wert des Widerstandes 4 gering ist.

Wird eine negative Betriebsspannung benötigt, so ist vorteilhafterweise die Schaltungsanordnung nach Fig. 3 zu verwenden. An die Klemmen 1 und 2 ist wiederum die Netzspannung angelegt. An die Klemme 2 ist die Diode 27 in Sperrichtung angeschlossen. Ein Spannungsteiler mit den Widerständen 35 und 36 ist an die Anode der Diode 27 angeschlossen und zur Klemme 1 geführt. Weiterhin führt von der Diode 27 eine Leitung zum Emitter eines Transistors 34 und zu einem Vorwiderstand 28. Die Basis des Transistors 34 ist an den Mittenanschluß des Spannungsteilers mit den Widerständen 35 und 36 angeschlossen. Der Kollektor des Transistors 34 steht mit der Basis eines Transistors 32 in Verbindung. Ein Widerstand 33 führt von der Basis des Transistors 32 zur Klemme 1. Der Emitter des Transistors 32 ist mit dem weiteren Anschluß des Vorwiderstandes 28 verbunden. Der Kollektor des Transistors 32 führt zu einer Klemme 30, an der die negative Versorgungsspannung abgreifbar ist. An die Klemmen 30 und 1 ist des weiteren ein Kondensator 29 angeschlossen.

Die Wirkungsweise dieser Schaltungsanordnung entspricht der Schaltungsanordnung nach Fig. 1. Statt npn-Transistoren werden hier entsprechende pnp-Typen eingesetzt. Die Diode 27 ist umgekehrt gepolt. Auf die Diode zwischen Transistor 34 und Transistor 32 kann hier verzichtet werden, da der Transistor 32 in Kollektorschaltung betrieben wird und nicht rückwärts leitend wird. Die Schaltung weist daher weniger Bauelemente auf als die zuvor beschriebene Schaltungsanordnung.

Die Schaltungsanordnungen sind vorteilhafterweise bei solchen Geräten einzusetzen, bei denen beispielsweise ein Strom von etwa 100 mA benötigt wird. Der Wärmeanfall und das Volumen der Schaltungsanordnungen sind gering, so daß eine spezielle Kühlung von Bauelementen in den meisten Fällen entfallen kann. Vorteilhafte Anwendungsgebiete sind beispielsweise die Verwendung der Schaltungen bei digitalen Uhren und bei elektronisch gesteuerten netzverbundenen Geräten, wie beispielsweise Haushaltsgeräte oder Elektrowerkzeuge.

**Patentansprüche**

1. Vorrichtung zur Gleichspannungsversorgung von elektrischen Baugruppen in netzbetriebenen Geräten mit einem Gleichrichter, einem Vorwiderstand und einem Ladekondensator, dadurch gekennzeichnet, daß ein elektronischer Schalter (8, 32) in Reihe zum Vorwiderstand (4, 28) und derart gesteuert ist, daß er nur zu Beginn und/oder am Ende einer Netzhalbwelle eingeschaltet ist.

2. Vorrichtung nach Anspruch 1, dadurch gekennzeichnet, daß der elektronische Schalter (8, 32) als Transistor ausgebildet ist.

3. Vorrichtung nach Anspruch 1 oder 2, dadurch gekennzeichnet, daß ein Schwellenwertschalter (11, 34) vorgesehen ist, der beim Überschreiten eines vorgegebenen Spannungswerts der Netzspannung den elektrischen Schalter (8) ausschaltet.

4. Vorrichtung nach Anspruch 3, dadurch gekennzeichnet, daß ein Hilfstransistor (11, 34) vorgesehen ist, an dessen Basis ein Teil der Netzspannung angelegt ist, und daß die Schaltschwelle des Transistors (11, 34) durch die Basis-Emitter-Durchbruchspannung bestimmt ist.

5. Vorrichtung nach Anspruch 3 oder 4, dadurch gekennzeichnet, daß mit dem Durchschalten des Hilfstransistors (11, 34) der elektronischen Schalter ausgeschaltet wird.

6. Vorrichtung nach einem der Ansprüche 2 bis 5, dadurch gekennzeichnet, daß der elektronische Schalter (8, 32) als Darlington-Transistor ausgebildet ist.

## Claims

1. Device for supplying direct voltage for electric assemblies in mains-operated units having a rectifier, a series resistance and a charging capacitor, characterised in that an electronic switch (8, 32) is connected in series with the series resistance (4, 28) and is controlled in such a manner that it is switched on only at the beginning and/or at the end of a mains half-wave.

2. Device according to Claim 1, characterised in that the electronic switch (8, 32) is constructed as a transistor.

3. Device according to Claim 1 or 2, characterised in that a threshold switch (11, 34) is provided which switches off the electric switch (8) when a predetermined voltage value of the mains voltage is exceeded.

4. Device according to Claim 3, characterised in that an auxiliary transistor (11, 34) is provided, to the base of which a part of the mains voltage is applied, and that the switching threshold of the transistor (11, 34) is determined by the base/emitter breakdown voltage.

5. Device according to Claims 3 or 4, characterised in that when the auxiliary transistor (11, 34) is switched through, the electronic switch is switched off.

6. Device according to on of Claims 2 to 5, characterised in that the electronic switch (8, 32) is constructed as a Darlington transistor.

## Revendications

1. Dispositif pour l'alimentation en tension continue d'ensemble électriques situés dans les appareils fonctionnant sur le réseau, comportant un redresseur, une prérésistance et un condesateur de charge, caractérisé en ce qu'un commutateur électronique (8, 32) est monté en série avec la prérésistance (4, 28) et en ce qu'il est piloté de façon à n'être en circuit qu'au début et/ou à la fin d'une demi-onde du réseau.

2. Dispositif selon la revendication 1, caractérisé en ce que le commutateur électronique (8, 32) est conçu comme transistor.

3. Dispositif selon la revendication 1 ou 2, caractérisé en ce qu'il est prévu un commutateur à valeur de seuil (11, 34) qui met hors circuit le commutateur électrique (8) si la tension du réseau dépasse une valeur de seuil prescrite.

4. Dispositif selon la revendication 3, caractérisé en ce qu'il est prévu un transistor auxiliaire (11, 34) à la base duquel est amenée un partie de la tension du réseau et en ce que le seuil de commutation du transistor (11, 34) est déterminé par la tension de claquage baseémetteur.

5. Dispositif selon la revendication 3 ou la revendication 4, caractérisé en ce que le commutateur électronique est mis hors circuit lorsque le transistor auxiliaire (11, 34) est conducteur.

6. Dispositif selon l'une des revendications 2 à 5, caractérisé en ce que le commutateur électronique (8, 32) est conçu comme transistor Darlington.

FIG.1

FIG.2A

FIG.2B

FIG.2C

FIG.3